(19) Europäisches Patentamt
European Patent Office
Office européen des brevets

(11) EP 2 847 053 B1

(12) EUROPEAN PATENT SPECIFICATION

(45) Date of publication and mention
of the grant of the patent:
25.07.2018   Bulletin 2018/30

(51) Int Cl.:
B60W 30/14 (2006.01)          B60W 50/06 (2006.01)
G05B 11/42 (2006.01)          B60W 10/06 (2006.01)
B60W 10/10 (2012.01)

(21) Application number: 13773132.9

(22) Date of filing: 28.03.2013

(86) International application number:
PCT/SE2013/050350

(87) International publication number:
WO 2013/151491 (10.10.2013 Gazette 2013/41)

(54) **METHOD AND SYSTEM FOR CONTROL OF AT LEAST A SPEED REGULATOR**

VERFAHREN UND SYSTEM ZUR ANSTEUERUNG MINDESTENS EINES
GESCHWINDIGKEITSREGLERS

PROCÉDÉ ET SYSTÈME POUR COMMANDER AU MOINS UN RÉGULATEUR DE VITESSE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 05.04.2012   SE 1250349

(43) Date of publication of application:
18.03.2015   Bulletin 2015/12

(73) Proprietor: Scania CV AB
151 87 Södertälje (SE)

(72) Inventors:
• JOHANSSON, Oskar
  S-112 19 Stockholm (SE)
• ÖGREN, Mikael
  151 48 Södertälje (SE)
• EVALDSSON, Martin
  S-131 31 Nacka (SE)

(74) Representative: Scania CV AB
Patents, GP 117kv
151 87 Södertälje (SE)

(56) References cited:
EP-A1- 0 278 232          DE-A1- 4 217 138
JP-A- 2008 055 994        US-A- 4 718 012
US-A- 4 853 857           US-A1- 2007 241 703
US-A1- 2009 048 755       US-A1- 2012 138 016

**Description**

**Technical field**

The present invention relates to a method for control of at least one speed regulator according to the preamble of claim 1 and a system for control of at least one speed regulator according to the preamble of claim 19.

The present invention relates also to a computer programme and a computer programme product which implement the method according to the invention.

**Background**

In motor vehicles, e.g. cars, trucks and buses, an engine system is usually controlled by means of a regulator, a so-called speed regulator, which may be situated in an engine control unit of the vehicle but may also be situated elsewhere on board. The speed regulator regulates a torque which is demanded from the engine system and which usually varies over time, e.g. when the speed of a vehicle has to be altered or the vehicle comes to an upgrade or a downgrade.

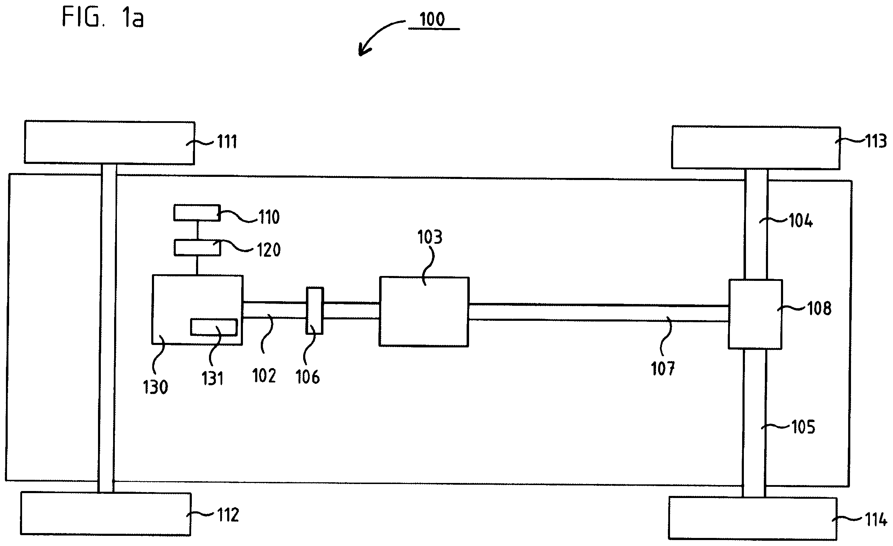

Fig. 1a depicts schematically an example of a heavy vehicle 100, e.g. a truck, bus or the like. The vehicle depicted comprises a forward pair of wheels 111, 112 and a rear pair of tractive wheels 113, 114. It further comprises a power train with an engine system 130 which in a conventional way, via an output shaft 102 from the engine system is connected to a gearbox 103, e.g. via a clutch 106.

An output shaft 107 from the gearbox 103 drives the tractive wheels 113, 114 via a final gear 118, e.g. a conventional differential, and driveshafts 104, 105 which are connected to said final gear. The engine system 130 may be equipped with a turbo unit 131.

Cruise control is now usual in motor vehicles such as cars, trucks and buses. One purpose of cruise control is to achieve a uniform predetermined vehicle speed either by adjusting the engine torque to avoid deceleration or by applying brake action on downhill runs where the vehicle is accelerated by its own weight. A more general purpose of cruise control is to provide the vehicle's driver with easy driving and more comfort.

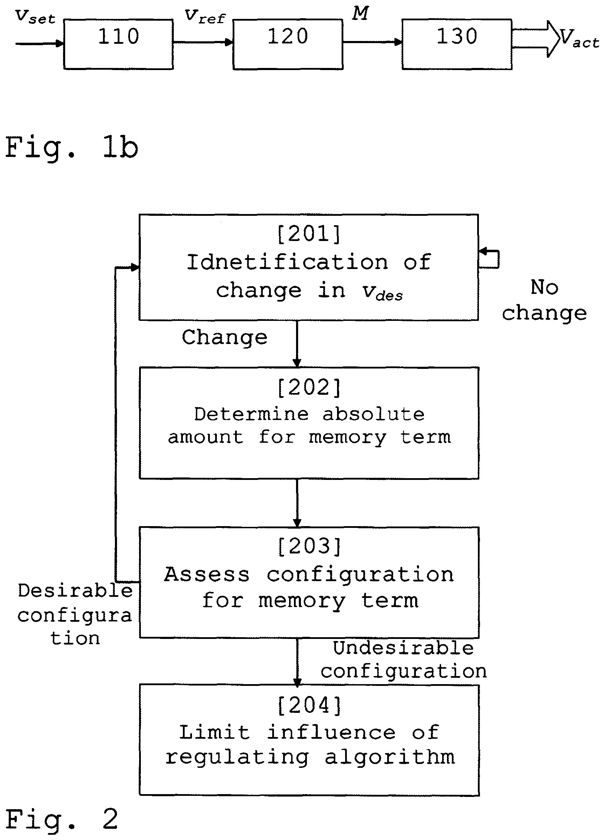

Figure 1a and Figure 1b illustrate schematically part of a cruise control system and its function, whereby a driver of a motor vehicle with a cruise control 110 usually chooses a set speed $v_{set}$ which he/she wishes the vehicle to maintain on level roads. The cruise control 110 then conveys to a speed regulator 120 a reference speed $v_{ref}$, i.e. a target speed $v_{des}$, which may be regarded as a set-point value for the vehicle's speed. The reference speed $v_{ref}$ is used by the speed regulator to determine a torque $M$ which it demands from an engine system 130 of the vehicle. The result of this torque demanded $M$ is the actual speed $v_{act}$ which the vehicle consequently assumes.

The set speed $v_{set}$ may therefore be regarded as an input signal to the cruise control, and the reference speed $v_{ref}$ as an output signal from the cruise control which is used as a target speed $v_{des}$ for control of the engine by means of the speed regulator. In other words, the reference speed $v_{ref}$ here serves as the set-point value for the vehicle's speed and is herein also referred to as the target speed $v_{des}$.

One skilled in the art will appreciate that the cruise control 110 may also be replaced by a command from the driver. Thus the target speed $v_{des}$ may also be conveyed to the speed regulator 120 as a result of the driver operating the vehicle's controls, e.g. an acceleration control such as an accelerator pedal or the like.

In today's traditional cruise controls (CCs) the reference speed $v_{ref}$ is identical with the set speed $v_{set}$ chosen by the user of the system, e.g. a driver of the vehicle. These CCs therefore maintain a constant reference speed $v_{ref}$ corresponding to the set speed $v_{set}$ chosen by the driver. The value of the reference speed $v_{ref}$ here changes only when adjusted by the user during the journey.

There are today cruise controls known as economical cruise controls, e.g. Ecocruise and the like, which try to estimate current running resistance, also have knowledge about the historical running resistance and allow the reference speed $v_{ref}$ to differ from the set speed $v_{set}$ chosen by the driver. A cruise control which allows such difference is herein referred to as a reference-speed-regulating cruise control.

There are various types of regulators. We describe here the function and the algorithm of a PID regulator, but one skilled in the art will appreciate that other types/variants of regulators work in similar ways. The present invention may be implemented for all such other types/variants of regulators.

A PID regulator is a regulator which gives an input signal u(t) to a system, e.g. the engine system 130, on the basis of a difference e(t) between a desired output signal r(t), which in this specification corresponds to the target speed $v_{des}$, and an actual output signal y(t) which in this specification corresponds to the actual speed $v_{act}$. In the case referred to below, e(t) = r(t) - y(t) according to

$$u(t) = K_p e(t) + K_I \int_0^t e(\tau) d\tau + K_D \frac{de(t)}{dt}$$

(eq. 1)

in which

- $K_p$ is an amplification constant,

- $K_I$ an integration constant, and

- $K_D$ a derivation constant.

A PID regulator regulates in three ways, viz. by a proportional amplification (P; $K_p$), by an integration (I; $K_i$) and by a derivation (D; $K_d$).
The constants $K_p$, $K_i$ and $K_d$ affect the system as follows.
An increased value for the amplification constant $K_p$ leads to the following changes in the PID regulator:

- increased rapidity,

- reduced stability margins,

- improved compensation of process disturbances, and

- increased control signal activity.

An increased value for the integration constant $K_i$ leads to the following changes in the PID regulator:

- better compensation of low-frequency process disturbances (eliminating residual errors pertaining to step disturbances)

- increased rapidity, and

- reduced stability margins.

An increased value for the derivation constant $K_d$ leads to the following changes in the PID regulator:

- increased rapidity,

- increased stability margins, and

- increased control signal activity.

The regulating algorithm for a PID regulator is well-known to one skilled in the art, who will also be familiar, as mentioned above, with other types/variants of regulators/regulating algorithms and their similarities to/differences from the PID regulator.
A control method according to the preamble of claim 1 and a control system according to the preamble of claim 19 are disclosed by EP 0 278 232 A1.

## Brief description of the invention

If the speed regulator 120 has for a lengthy period had in its algorithm a relatively large regulating error e, it is, depending on the function of the speed regulator's regulating algorithm, not possible to make the rapid changes in the torque $M$ which are required to be able to follow an optimum curve for the vehicle's actual speed $v_{act}$ and thereby be able to optimise the vehicle's speed profile, with consequent potential for also optimising its fuel consumption.
In other words, an inertia of the torque $M$ is built up over the time which the algorithm in the speed regulator 120 takes to perform its calculations, owing to regulating error e incorporated in the algorithm. There is therefore risk of torque uprampings and downrampings being slow, e.g. at large steps in the set-value $v_{des}$. This slowness may cause problems as regards optimum control of speed adjustment and fuel consumption.

The regulating error e in the speed regulator is due to the difference between the speed set-point value, i.e. the target speed $v_{des}$, and the current value of the vehicle's speed, i.e. the actual speed $v_{act}$. Particularly when there are relatively large changes in the vehicle's actual speed $v_{act}$, e.g. when travelling uphill or downhill, this regulating error e will be relatively large for relatively long periods of time, with consequent build-up of inertia of the torque M.

Reference-speed-regulating cruise controls, e.g. "look-ahead" cruise controls (LACC), use knowledge about road sections ahead to determine the configuration of the reference speed $v_{ref}$. The reference speed $v_{ref}$ is therefore here allowed, within a speed range, to differ from the set speed $v_{set}$ chosen by the driver, in order to achieve more economical operation from a fuel perspective. LACCs typically adjust the reference speed $v_{ref}$ to achieve a desired profile for the vehicle's actual speed $v_{act}$ over a predetermined distance travelled. As the reference speed $v_{ref}$ here serves as the target speed $v_{des}$ in the regulating algorithm, these adjustments of the reference speed $v_{ref}$ often cause the regulating error e in the regulating algorithm, thereby building up the inertia of the torque M.

An object of the present invention is to make rapid changes possible for the torque M.

This object is achieved by the aforesaid method for control of at least one speed regulator, according to the characterising part of claim 1. It is also achieved by the aforesaid system for control of at least one speed regulator, according to the characterising part of claim 19.

The present invention makes rapid changes in the torque M possible by enabling the system to choose whether a previous build-up is to be maintained or not for the torque M. According to the present invention this may be achieved by influencing the inertia which arises from an incremented memory term/memory element of the regulating algorithm.

The memory element of the regulating algorithm is related to the history of the speed regulator, since the memory element depends on an integration of the regulating error e in the algorithm. If for example a relatively large regulating error e is integrated upwards, e.g. before a change in the target speed $v_{des}$ takes place, the vehicle's actual speed $v_{act}$ would in previous known systems react slowly when the change in the target speed $v_{des}$ takes place. With the present invention, the vehicle's actual speed $v_{act}$ reacts considerably more quickly to the change in the target speed $v_{des}$, since the influence of the regulating algorithm upon the engine system is curtailed if the memory term has an undesirable configuration, as it does if its absolute amount decreases after a change, e.g. a step, in the target speed $v_{des}$ has been identified.

In one embodiment of the present invention, the curtailment of the regulating algorithm's influence takes the form of a temporary departure from regulation based on the algorithm. Here an engine torque demanded may for example be limited at the change in the target speed $v_{des}$. After this limitation of torque demanded has initially been utilised after the change in the target speed $v_{des}$, the system reverts to regulation based on the algorithm.

In one embodiment of the present invention, the curtailment of the regulating algorithm's influence takes the form of manipulation of the memory term in the algorithm, e.g. by the memory term being set to a suitable value initially at the change in the target speed $v_{des}$.

In one embodiment, this suitable value to which the memory term is set is zero (0), corresponding to elimination of the memory term in the regulating algorithm. The algorithm thus no longer remembers what previously happened during the regulation of the engine system, and the engine system's torque inertia has therefore been considerably reduced, which means that a desired speed curve can be followed more exactly, resulting in cruise control and speed regulation which are more efficient from a fuel economy perspective.

The present invention thus results in cruise control which is more fuel-efficient, which a driver will also intuitively regard as positive, since irritating delays in the system are minimised and a more instantaneous speed regulation is achieved.

In one embodiment of the present invention, losses in the power train may also be controlled when a change, e.g. a step, in the target speed $v_{des}$ has been identified. Here it is for example possible to choose to influence parasitic losses, e.g. in a generator, a cooling fan or an air processing system which consume energy in the power train. A further example of measures to reduce the losses in the power train comprise lowering the exhaust backpressure considerably and/or operating the gearbox in such a way that less energy is consumed by engaging a higher gear or freewheeling. Another aspect is that an increased running resistance will enable the vehicle to reach a lower speed more quickly if this is desirable.

**Brief list of drawings**

The invention is explained in more detail below with reference to the attached drawings, in which the same reference notations are used for similar items, and

Figure 1a is a schematic drawing of a vehicle,

Figure 1b is a schematic diagram of a cruise control, a speed regulator and an engine system,

Figure 2 is a flowchart for the method according to the present invention,

Figure 3 is a schematic illustration of the function of the present invention,

Figure 4 illustrates schematically the build-up of the P, I and D elements in the regulating algorithm,

Figure 5 depicts a control unit according to the present invention.

**Description of preferred embodiments**

Figure 2 is a schematic flowchart for the method according to an aspect of the present invention.

The method begins with a first step [201] in which a change in the target speed $v_{des}$ is identified. As a second step [202] of the method, which is performed if a change in the target speed $v_{des}$ is identified at the first step [201], an absolute amount is determined for a memory term of the regulating algorithm used by the regulating system. This memory term is related to a history of how the speed regulator previously regulated the engine system. If PID regulation is used, the magnitude of the I term $\int_0^t e(\tau)d\tau$ is determined by determining its absolute amount $\left| \int_0^t e(\tau)d\tau \right|$.

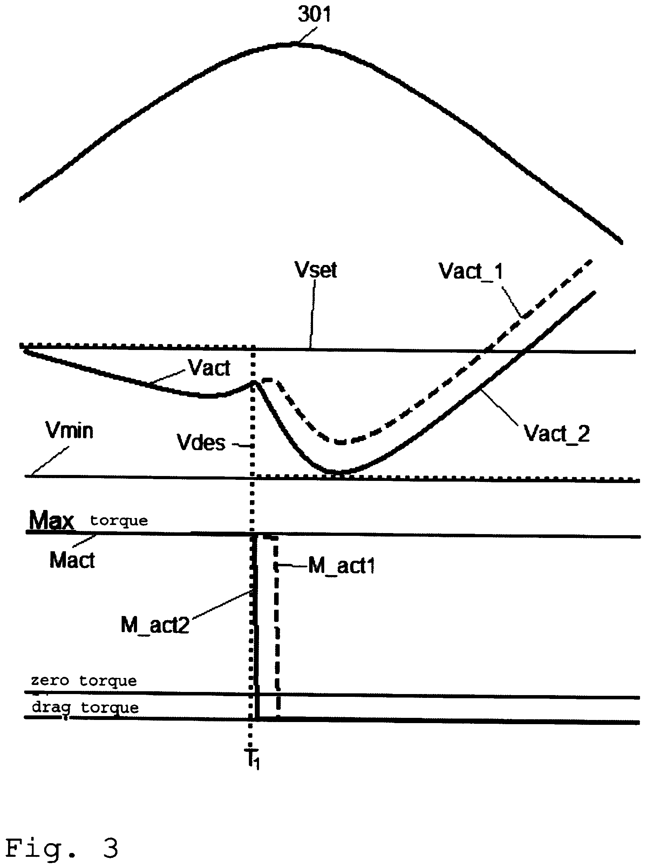

The third step [203] of the invention assesses whether the I term's absolute amount $\left| \int_0^t e(\tau)d\tau \right|$ has a desirable configuration or not. An undesirable configuration is if the absolute amount decreases after the change in the target speed $v_{des}$. This may for example happen when an engine torque $M$ demanded of the engine system 130 changes from a substantially maximum engine torque to a drag torque, as illustrated in Figure 3, which is described in more detail below. When the engine system is dragged, it contributes substantially no propulsive force, e.g. when the fuel supply to the engine system is throttled.

In the fourth step [204] of the method, which is performed if at the third step [203] it is determined that the I term's absolute amount $\left| \int_0^t e(\tau)d\tau \right|$ has an undesirable configuration, the present invention results in a curtailment of the regulating algorithm's influence upon the engine system.

According to the present invention, curtailment of the regulating algorithm's influence therefore allows the regulating system to choose whether a previous build-up is to be maintained or not for the torque $M$, enabling rapid changes in the torque $M$.

In one embodiment of the present invention, the curtailment of the regulating algorithm's influence takes the form of manipulation of the memory term in the regulating algorithm. The memory term may here be determined to have any suitable value which enables rapid changes for the torque $M$. The memory term may here be set to this suitable value initially when the change in the target speed $v_{des}$ has been detected.

In one embodiment this suitable value is one which causes the memory term in the regulating algorithm to take out, i.e. compensate for, a proportional term and a derivative term in the algorithm. If for example a PID regulating algorithm is used, the I term is therefore given a value such that it initially takes out the P term and the D term.

In one embodiment, this suitable value is zero (0), corresponding to elimination of the memory term in the regulating algorithm for the speed regulator 120. The memory term is related to a history of the speed regulator's regulation of the engine system 130, so the algorithm after the elimination no longer remembers what previously happened during the regulation of the engine system. The torque inertia of the engine system may thus be considerably reduced. As described above, the elimination takes place here if a change in the target speed $v_{des}$ has been detected and it is determined that the memory term's configuration is undesirable.

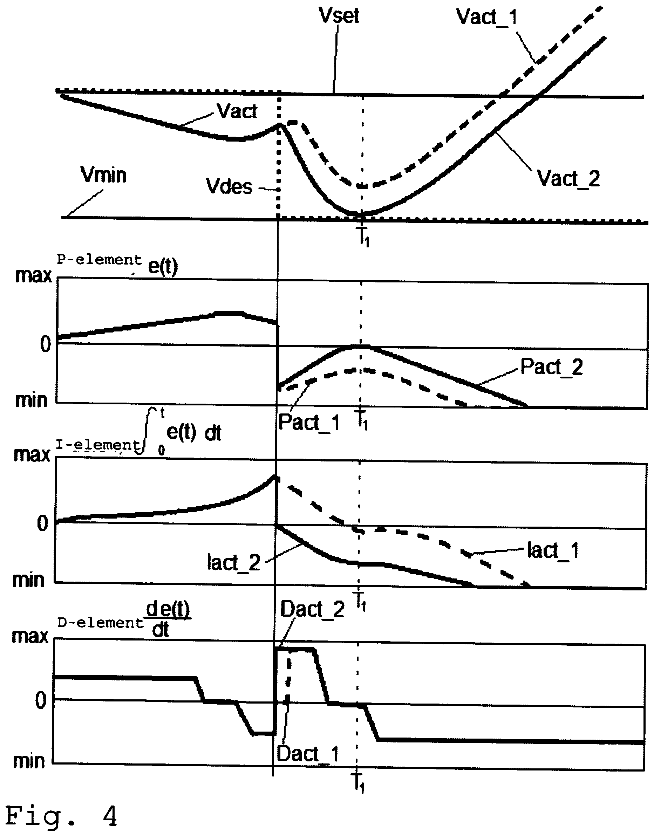

The memory term's configuration is undesirable if its absolute amount decreases after a change, e.g. a step, in the target speed $v_{des}$ has been identified. The memory element of the regulating algorithm depends on integration of the regulating error $e$ in the algorithm and therefore on the speed regulator's history. This is exemplified for a PID regulator in Figure 4, which is described in more detail below. In Figure 4 a regulating error $e$ occurs because of a steep upgrade. This causes the I element to be incremented. When the target speed $v_{des}$ takes a step downwards, $I_{act\_1}$, which corresponds to the I element in previous known systems after the step, would thereafter have begun to decrease. In this embodiment the I element built up historically at the step in the target speed $v_{des}$ would then be eliminated, resulting in $I_{act\_2}$, which corresponds to the I element for the present invention after the step for the target speed $v_{des}$.

This elimination of the memory term in the regulating algorithm enables a rapid change in the torque $M$. This rapid change is here possible because the inertia of the torque $M$ built up through the influence of the regulating error e during the algorithm's control of the engine system 130 consequently disappears.

The present invention thus enables quicker upramping or downramping of the torque $M$, since the speed regulator 120 no longer remembers the regulating error e which previously affected the algorithm.

Figure 3 depicts schematically a non-limitative example illustrating the result of using an embodiment of the present invention. Here we have a vehicle travelling on a road section with topography according to curve 301, viz. an upgrade followed by a downgrade. If the vehicle is here equipped with a reference-speed-regulating cruise control which caters for topography, e.g. an LACC, it will allow the reference speed $v_{ref}$, which here takes the form of the speed regulator's target speed $v_{des}$, to be lowered relative to the chosen set speed $v_{set}$ just before the crest of the hill, since the cruise control expects the vehicle to be accelerated by its own weight on the downhill side. The target speed $v_{des}$ is therefore lowered just before the crest to a lowest permissible speed $v_{min}$, resulting in a regulating error e because the actual speed $v_{act}$ will deviate from the target speed $v_{des}$ when the latter changes, as described in more detail below.

Curve $v_{act\_1}$ shows the pattern of the vehicle's actual speed $v_{act\_1}$ which arises from the lowering of the target speed $v_{des}$ if the present invention is not applied, i.e. what the actual speed $v_{act}$ would have been if a traditional speed regulator was used. Reference-speed-regulating cruise controls often control relatively large lowerings of the reference speed $v_{ref}$ by setting it to a value which is well below the set speed $v_{set}$ and also well below the vehicle's actual speed $v_{act\_1}$, in other words $v_{ref} \ll v_{set}$ and $v_{ref} \ll v_{act\_1}$, thereby generating relatively long-lasting and large regulating error e. When the reference speed $v_{ref}$ is set to such a low value, the lowering is effected by throttling the fuel supply, so-called "fuel cut-off".

Curve $v_{act\_2}$ shows the pattern of the vehicle's actual speed $v_{act\_2}$ which arises from the lowering of the target speed $v_{des}$ if an embodiment of the present invention is applied. The embodiment of the present invention here identifies that a change in the target speed $v_{des}$, in the form of a lowering of it, takes place.

An absolute value and a configuration for the memory term in the regulating algorithm are determined and assessed. A reference-speed-regulating cruise control for example decides whether to lower the reference speed $v_{des}$ so that a simulated vehicle speed $v_{sim}$ along curve 301 will not fall below the lowest permissible speed $v_{min}$. In this embodiment of the present invention, the memory term in the algorithm has to be eliminated if a change in the target speed $v_{des}$ takes place which results in an undesirable configuration of the memory term's absolute amount. This makes it easier for the simulated vehicle speed $v_{sim}$ and the actual vehicle speed $v_{act}$ to be followed up. As a non-limitative example it may be mentioned that the regulating error e in the example illustrated in Figure 3 is already relatively large from the outset and also grows to a considerable magnitude over time. Thus the curve $v_{act\_2}$ represents the vehicle's actual speed $v_{act\_2}$ if the memory term in the algorithm is eliminated according to the invention.

Figure 3 clearly shows that the actual torque $M_{act\_2}$ according to the present invention reacts considerably more quickly to the lowering of the target speed $v_{des}$ than the actual torque $M_{act\_1}$ according to previous known speed regulators. The present invention ramps the actual torque $M_{act\_2}$ down to drag torque substantially immediately after the lowering of the target speed $v_{des}$, whereas in previous known solutions the actual torque $M_{act\_1}$ takes a considerably longer time to drop to drag torque.

Figure 3 also shows clearly that the actual speed $v_{act\_2}$ according to the present invention reacts considerably more quickly to the lowering of the target speed $v_{des}$ to a lowest permissible speed $v_{min}$ than the actual speed $v_{act\_1}$ according to previous known speed regulators. As schematically depicted in Figure 3, the actual speed $v_{act\_2}$ according to the present invention turns down substantially immediately when the target speed $v_{des}$ is lowered, whereas the actual speed $v_{act\_1}$ according to previous known regulators continues initially to increase in magnitude before turning down. This increase in the actual speed $v_{act\_1}$ is due to the inertia in torque $M$ which built up and was stored in previous known speed regulators.

As the present invention eliminates the memory term in the regulating algorithm, and hence also the inertia in the torque $M$, the result is a much more flexible actual speed $v_{act\_2}$. This makes it possible for the actual speed $v_{act\_2}$ to be controlled more exactly, which also results in less fuel consumption and a more distinct and instantaneous operating sensation for the driver.

In one embodiment of the present invention, the curtailment of the regulating algorithm's influence takes the form of temporary departure from regulation based on the algorithm. Here an engine torque demanded may for example be limited at the change in the target speed $v_{des}$. After this limitation of engine torque demanded has initially been utilised after the change in the target speed $v_{des}$, the system reverts to regulation based on the algorithm. To achieve a smooth transition when the system reverts to regulation according to the regulating system, it is possible in one embodiment of the invention for the memory term in the algorithm to be initiated, i.e. to be given a value, so that it assumes a value which results in a gentle transition to regulation according to the algorithm.

In the example depicted in Figure 3, the engine torque might be limited to below or equal to zero, $M \leq 0$, substantially immediately after the change in the target speed $v_{des}$, resulting in an immediate response to the change. In one embodiment the temporary departure is only applied initially after the change in the target speed $v_{des}$. The temporary departure may for example cease if the speed regulator 120 itself demands an engine torque which is below or equal to zero, $M \leq 0$, or if the actual speed $v_{act}$ differs from the target speed $v_{des}$ by a differential speed $v_{diff}$ or less, i.e. $v_{act}$ - $v_{des}$ $\leq$ $v_{diff}$, where the differential speed $v_{diff}$ may for example have a value of 0.5 km/h, i.e. $v_{diff}$ = 0.5 km/h.

In one embodiment of the present invention, the speed regulator according to the invention uses a PID algorithm, i.e. the speed regulator is a PID regulator.

As described above, there is often a regulating error e in the algorithm which is integrated upwards in the PID regulator. This is illustrated schematically in Figure 4 for topography corresponding to the topographic curve 301 in Figure 3.

Figure 4 illustrates schematically how the P, I and D elements in the PID algorithm vary in magnitude, both when the present invention is not employed (broken lines with index _1) and when it is employed (continuous lines with index _2), as described in more detail below. One skilled in the art will appreciate that similar diagrams are possible with other types/variants of regulating algorithms.

The P term in the PID algorithm takes the form in this embodiment of the term for proportional amplification, which in previous known solutions, $P_{act\_1}$, has a shape corresponding to the target speed $v_{des}$ minus the actual vehicle speed $v_{act\_1}$ and multiplied by a constant $K_p$, i.e. $P_{act\_1}$ = ($v_{des}$ - $v_{act\_1}$) * $K_p$, and for the present invention, $P_{act\_2}$, it has a shape corresponding to the target speed $v_{des}$ minus the actual vehicle speed $v_{act\_2}$ multiplied by a constant $K_p$, i.e. $P_{act\_2}$ = ($v_{des}$ - $v_{act\_2}$) * $K_p$.

As may be seen in Figure 4, the term for proportional amplification according to the present invention, $P_{act\_2}$, after the lowering of the target speed $v_{des}$ reaches almost zero at the first time $T_1$. The term for proportional amplification in previous known solutions, $P_{act\_1}$, reaches at the first time $T_1$ a value which is relatively far from zero. This is because the I term in previous known solutions, $I_{act\_1}$, is integrated before the lowering and thereafter affects the system for a period of time after the target speed $v_{des}$ has changed value, and because the vehicle is thereafter accelerated downhill by its train weight.

The I term in the PID algorithm takes the form in this embodiment of the memory term, which is integrated upwards to a larger and larger value when there is a regulating error e. In previous known solutions, $I_{act\_1}$, the I element has a continuous curve, but in the embodiment of the present invention in which the I term is eliminated the curve $I_{act\_2}$ is discontinuous because of a jump which occurs at the elimination of the I term. As may be seen in Figure 4, this embodiment eliminates the memory term if a change in the target speed $v_{des}$ has been identified and the absolute amount of the I element has an undesirable configuration. This may for example occur if the vehicle's engine system will be dragged or if a reference-speed-regulating cruise control changes the reference speed.

The elimination of the I term may in practice take place in such a way that the integrating term is set to the value zero, as depicted in Figure 4. This elimination then results in the PID speed regulator adopting a PD action of the regulator in close proximity to the change in the target speed $v_{des}$.

After the elimination, the I term for this embodiment, $I_{act\_2}$, has in the example in Figure 4 a value which is initially zero (0) and is lower than corresponding terms in previous known solutions, $I_{act\_1}$. This allows rapid changes in the torque M, as described above.

The D term in the PID algorithm takes the form in this embodiment of the term for derivation, which in previous known solutions, $D_{act\_1}$, and for the embodiment, $D_{act\_2}$, has a substantially similar shape. The term for the embodiment of the present invention, $D_{act\_2}$, does however differ from the term in previous known solutions, $D_{act\_1}$, in being allowed to change in close proximity to the lowering of the desirable speed $v_{des}$, since the I term, $I_{act\_2}$, is set to the value zero.

The corresponding term for previous known solutions, $D_{act\_1}$, takes this step somewhat later in time when the P term, $P_{act\_1}$, takes out, i.e. compensates for, the I term $I_{act\_1}$. This means that the step in the target speed $v_{des}$ is not reflected immediately in the actual speed in previous known solutions, $v_{act\_1}$, resulting in difficulties in predicting a lowest speed for the reference-speed-regulating cruise control, with possible reduction also of the fuel saving potential.

In one embodiment of the present invention, not only the speed regulator 120 but also the function of the turbo unit 131 in the engine system 130 is also guided when a change in the target speed $v_{des}$ has been identified, if the I element's absolute amount has an undesirable configuration. In other words, the turbo function is guided if it is desirable that a simulated vehicle speed $v_{sim}$ in the reference-speed-regulating cruise control should correspond to the actual speed $v_{act}$.

In one embodiment, the function of the turbo unit 131 is affected by this form of control in that the turbo pressure decreases considerably. Here the turbo pressure is therefore dumped immediately when it is found that there is a change in the target speed $v_{des}$, if the I element's absolute amount has an undesirable configuration, resulting in reduced engine friction losses (since the air resistance during the compression decreases with decreasing exhaust backpressure) and in less fuel consumption for the vehicle.

In one embodiment of the present invention, not only the curtailment of the regulating algorithm's influence upon the speed regulation but also at least one power train resistance-changing measure also takes place when it has been found that there is a change in the target speed $v_{des}$ and the I element's absolute amount has an undesirable configuration.

An example of a power train resistance-reducing measure is a change in the gear ratio of the gearbox 103 in the vehicle 100. The resistance in the power train may be reduced by engaging a neutral gear. The running resistance may also be reduced by engaging a higher gear, i.e. a gear which involves a lower engine speed and hence also less friction in the engine. This results in less running resistance because of the lower engine speed, which means that the vehicle acquires a slower/gentler change in the actual speed $v_{act}$ in response to a change in the target speed $v_{des}$.

These reductions in the resistance in the power train reduce the vehicle's total fuel consumption and also the wear on the power train components. In particular, changing up to higher gears results in a lower speed for the engine system 130 and consequently smaller losses in the power train as a whole.

An example of a power train resistance-increasing measure is a change in the gear ratio of the gearbox 103 in the vehicle 100. The resistance in the power train may here be increased by a downward gear change, i.e. by engaging a gear which results in a higher engine speed, increased running resistance and also greater counterforce in engine braking. This makes use of the fact that the friction pertaining to the engine increases with increasing engine speed, i.e. the power train resistance increases with increasing speed of the engine.

It is important here to achieve in the context of a reference-speed-regulating cruise control, e.g. an LACC, a good match between a simulated vehicle speed $v_{sim}$ and an actual vehicle speed $v_{act}$ at a lowering. In one embodiment, the parasitic losses and/or the resistance in the power train components may also be increased in order to achieve quicker speed lowering on heavy vehicles.

In one embodiment of the present invention, the curtailment of the regulating algorithm's influence, i.e. the manipulation or elimination of the memory term in the algorithm, the temporary departure from regulation according to the algorithm, and/or possibly the dumping of the turbo pressure and/or the change in the gear ratio of the gearbox 103, causes a relatively large decrease in the torque $M$ taken out of the engine system 130. The magnitude of this decrease should with advantage be such as to be found comfortable for a driver and/or passengers in the vehicle 100. Good comfort and operating sensation for the vehicle are thus maintained even when a substantial fuel saving is made.

The decrease has in one embodiment to be as great as possible without being found uncomfortable, which mostly depends on the vehicle's train weight, since the train weight reduces the influence of propulsive torque and causes comfortable running.

In one embodiment of the present invention, information about road sections ahead is used to identify whether there is a change in the target speed $v_{des}$ and whether the I element's absolute amount has an undesirable configuration. Such information about the road section ahead may comprise one or more from among topography, road curvature, traffic situation, roadworks, traffic density and road surface state. Information from a cruise control and/or a speed regulator may also be used for this identification of a change in the target speed $v_{des}$ and of an undesirable configuration of the I element's absolute amount, since accelerations and/or decelerations and/or torque requirements may thus be predicted. Driver input may also be used in the identification.

As mentioned above, knowledge of road sections ahead may be used in economical cruise controls, e.g. LACCs. It may for example comprise prevailing topography, road curvature, traffic situation, roadworks, traffic density and road surface state. It may also comprise a speed limit on the road section ahead, and a traffic sign beside the road. One embodiment of the present invention uses at least one of these kinds of knowledge in identifying the change in the target speed $v_{des}$ and an undesirable configuration of the memory term, and to determine an influence of parasitic losses and resistances in the power train so that a simulated speed $v_{sim}$ and an actual speed $v_{act}$ become as equal to one another as possible. This is highly advantageous and computationally efficient, since these kinds of knowledge are readily available on board the vehicle. They may therefore be used here for various purposes, both for cruise control and to identify the change in the target speed $v_{des}$ and an undesirable configuration of the memory term. The control of at least the speed regulator 120 and possibly also the turbo unit 131 and/or the gearbox 103 according to the present invention may thus be implemented with very little in terms of extra calculations or complexity.

These kinds of knowledge may for example be obtained by means of location information, e.g. GPS (global positioning system) information, map information and/or topographical map information, weather reports, information communicated between vehicles and information communicated by radio.

For example, information about the topography of road sections ahead may be used to identify upgrades and/or downgrades on which regulating error may occur, e.g. because of dragging of the engine system 130. The change in the target speed $v_{des}$ and an undesirable configuration of the memory term may thus also be identified.

If a reference-speed-regulating cruise control is used in the vehicle, a change in the actual speed $v_{act}$ may be because the reference speed $v_{ref}$, which then corresponds to the target speed $v_{des}$, changes relative to the set speed $v_{set}$. Regulating error $e$, due for example to dragging of the engine system 130, may occur in association with such speed changes, so information from the cruise control may be used in identifying the change in the target speed $v_{des}$ and in identifying an undesirable configuration of the memory term.

In a similar way, information about curvature of road sections ahead may be used to identify coming speed changes and regulating error $e$, and hence to identify the change in the target speed $v_{des}$ and to identify an undesirable configuration of the memory term, since the regulating error $e$ arises from the fact that the actual speed $v_{act}$ often drops at bends, particularly at sharp bends, before increasing again after them.

Similarly, information about traffic situations on road sections ahead may be used to identify coming changes in the target speed $v_{des}$ and to identify undesirable configurations of the memory term. Here knowledge about, for example, a red light ahead may conceivably be used to identify at least one likely change in speed close to the red light, resulting in regulating error $e$.

Knowledge of roadworks ahead may also be used to identify coming changes in the target speed $v_{des}$ and to identify undesirable configurations of the memory term, since speed limits and hence regulating error e usually occur close to roadworks.

Information about traffic density on road sections ahead may also be used to identify coming changes in the target speed $v_{des}$ and to identify undesirable configurations of the memory term, since traffic queues will for example make it necessary to reduce speed, whereupon regulating error $e$ occurs.

Road surface state also affects vehicle speed, since a lower speed needs to be maintained where the surface state is bad, e.g. when there is ice, than where it is good. Information about the surface state of road sections ahead may thus also be used to identify coming changes in the target speed $v_{des}$ and to identify undesirable configurations of the memory term.

Driver input may also be used to identify coming changes in the target speed $v_{des}$ and to identify undesirable configurations of the memory term. Here the user interface may for example be equipped with at least one input device which the driver can use. If the driver sees that a change in the target speed $v_{des}$ and an undesirable configuration of the memory term are likely to occur shortly, he/she may here make some kind of input which the system interprets to the effect that such a situation will arise. As a non-limitative example, the driver may make such an input if he/she sees a stationary queue, an accident or an area of bad surface on the road ahead, or a long downgrade coming. Here such input may be interpreted to the effect that a change in the target speed $v_{des}$ and an undesirable configuration of the memory term will occur after a first amount of time has elapsed since the input.

As mentioned above, in reference-speed-regulating cruise controls, e.g. LACCs, the reference speed $v_{ref}$ is allowed to differ from the set speed $v_{set}$. In one embodiment of the present invention, a change in the target speed $v_{des}$ and an undesirable configuration of the memory term are regarded as identified if the magnitude of the reference speed $v_{ref}$ changes. This is illustrated schematically in Figures 3 and 4.

Here the knowledge that speed changes which follow changes in the reference speed $v_{ref}$ are based on the memory term is used, since the regulating error is integrated upwards during the time when the speed change takes place. Immediately then identifying a change in the target speed $v_{des}$ and an undesirable configuration of the memory term on the basis of this knowledge results in a very quick and effective curtailment of the influence of the regulating algorithm, e.g. elimination of the memory term in the algorithm.

In one embodiment of the invention the elimination takes place each time the magnitude of the reference speed $v_{ref}$ changes.

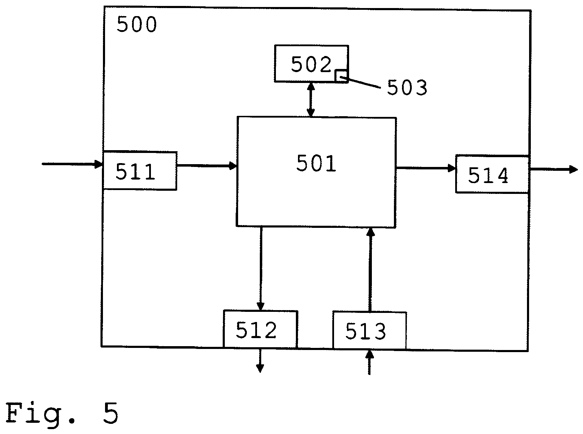

One skilled in the art will appreciate that the method for control of at least one speed regulator according to the present invention may also be implemented in a computer programme which, when executed in a computer, causes the computer to conduct the method. The programme usually takes the form of a computer programme product 503 (depicted in Figure 5) stored on a digital storage medium and is contained in a computer-readable medium of the computer programme product. Said computer-readable medium comprises a suitable memory, e.g. ROM (read-only memory), PROM (programmable read-only memory), EPROM (erasable PROM), flash memory, EEPROM (electrically erasable PROM), a hard disc unit, etc.

Figure 5 depicts schematically a control unit 500 adapted to being able to control at least one speed regulator 120. The control unit 500 comprises a calculation unit 501 which may take the form of substantially any suitable kind of processor or microcomputer, e.g. a circuit for digital signal processing (digital signal processor, DSP), or a circuit with a predetermined specific function (application specific integrated circuit, ASIC). The calculation unit 501 is connected to a memory unit 502 which is situated in the control unit 500 and which provides the calculation unit with, for example, the stored programme code and/or the stored data which the calculation unit needs to enable it to perform calculations. The calculation unit is also adapted to storing partial or final results of calculations in the memory unit 502.

The control unit 500 is further provided with respective devices 511, 512, 513, 514 for receiving and sending input and output signals. These input and output signals may comprise waveforms, pulses or other attributes which the input signal receiving devices 511, 513 can detect as information and which can be converted to signals which the calculation unit 501 can process. These signals are then conveyed to the calculation unit. The output signal sending devices 512, 514 are arranged to convert signals received from the calculation unit in order, e.g. by modulating them, to create output signals which can be conveyed to other parts of systems on board the vehicle, e.g. to the speed regulator 120, the engine system 130, the turbo unit 131 or the gearbox 103.

Each of the connections to the respective devices for receiving and sending input and output signals may take the form of one or more from among a cable, a data bus, e.g. a CAN (controller area network) bus, a MOST (media oriented systems transport) bus or some other bus configuration, or a wireless connection.

One skilled in the art will appreciate that the aforesaid computer may take the form of the calculation unit 501 and that the aforesaid memory may take the form of the memory unit 502.

One aspect of the present invention proposes a system for control of at least the speed regulator and in certain embodiments for control also of a turbo unit 131 and/or a gearbox 103. The system according to the invention comprises an identification unit adapted to identifying a change in the target speed $v_{des}$. The system comprises also a determination unit adapted to determining an absolute amount for the memory term in the regulating algorithm. The system comprises also a curtailment unit adapted to curtailing the algorithm's influence upon the engine system if the memory term's absolute amount has an undesirable configuration. In one embodiment of the invention this curtailment may take the form of eliminating the memory term in the algorithm.

One skilled in the art will also appreciate that the above system may be modified according to the various embodiments of the method according to the invention. The invention relates also to a motor vehicle, e.g. a truck or a bus, which is provided with the system for controlling at least the speed regulator according to the invention.

The present invention is not restricted to the invention's embodiments described above but relates to and comprises all embodiments within the protective scope of the attached independent claims.

## Claims

1. A method for control of at least one speed regulator (120), which regulator (120) regulates an engine system (130) in a vehicle (100) on the basis of a regulating algorithm, so that an actual speed $v_{act}$ of said vehicle (100) is guided towards a target speed $v_{des}$, said method comprising

   - identifying a change in said target speed $v_{des}$, and said method being **characterized by** further comprising the steps of
   - determining an absolute amount for a memory term of said algorithm, which memory term is related to a history of the regulation of said engine system (130) by said speed regulator (120), and which memory term is an integrating term of said speed regulator, and
   - curtailing the influence of said algorithm upon said engine system (130) if it is determined that said absolute amount of said memory term decreases after said identified change in said target speed $v_{des}$.

2. A method according to claim 1, in which said step of curtailing the influence of said regulating algorithm upon said engine system (130) comprises temporarily departing from regulation according to said algorithm.

3. A method according to claim 2, in which said departure from said regulation according to said regulating algorithm comprises a limitation of a demanded engine torque initially after said change, followed by resumption of said regulation based on said algorithm.

4. A method according to claim 1, in which said step of curtailing the influence of said regulating algorithm upon said engine system (130) comprises manipulating said memory term.

5. A method according to claim 4, in which said manipulation comprises said memory term being given initially after said change a value such that said memory term compensates for a proportional term and/or a derivative term in said regulating algorithm.

6. A method according to claim 4, in which the manipulation of said memory term comprises its elimination.

7. A method according to any one of claims 1-6, in which said regulating algorithm is a PID algorithm and said memory term takes the form of an integrating term I in said PID algorithm.

8. A method according to claim 7, in which said integrating term I is given the value zero (0) at an elimination.

9. A method according to any one of claims 1-8, in which said control further comprises acting upon a function of a turbo unit (131) in said engine system (130) when it is determined that said absolute amount of said memory term decreases after said identified change in said target speed $v_{des}$.

10. A method according to claim 9, in which said action upon said function results in a considerable decrease in a turbo pressure of said turbo unit (131).

11. A method according to any one of claims 1-10, in which said control further comprises effecting at least one measure which changes a resistance of a power train in said vehicle (100) when it is determined that said absolute amount of said memory term decreases after said identified change in said target speed $v_{des}$.

12. A method according to claim 11, in which said at least one measure comprises a change of gear ratio in a gearbox (103) in said vehicle (100).

13. A method according to claim 12, in which said change of said gear ratio comprises one of the following:

- engaging a neutral gear,
- engaging, when said change takes the form of a lowering of said resistance of said power train, a lower-speed gear than the vehicle speed would have required, resulting in a relatively slow decrease in the deviation of said actual speed $v_{act}$ from said target speed $v_{des}$,
- engaging, when said change takes the form of a raising of said resistance of said power train, a higher-speed gear than the vehicle speed would have required, resulting in an increased running resistance.

14. A method according to any one of claims 1-13, in which said engine system (130) will be dragged during the curtailment of said regulating algorithm's influence upon said engine system (130), a fuel supply to said engine system (130) being throttled when said engine system is dragged, and said engine system (130) contributing substantially no propulsive force.

15. A method according to any one of claims 1-14, in which said identification is based on at least one of the following forms of information:

- cruise control information,
- regulator information,
- topography information,
- road curvature information,
- traffic situation information,
- roadworks information,
- traffic density information,
- road surface state information, and
- driver input.

16. A method according to claim 15, in which said at least one form of information is provided by at least one of the following devices:

- cruise control,
- speed regulator,
- positioning device,
- map information device,
- image recording device,
- input device,
- traffic information device, and
- road surface state information device.

17. A computer programme which comprises programme code and which when said programme code is executed in a computer causes said computer to conduct the method according to any one of claims 1-16.

18. A computer programme product comprising a computer-readable medium and a computer programme according to claim 17, which programme is contained in said medium.

19. A system for control of at least one speed regulator (120), which regulator (120) is adapted to regulating an engine system (130) in a vehicle (100) on the basis of a regulating algorithm, so that an actual speed $v_{act}$ of said vehicle (100) is guided towards a target speed $v_{des}$, said system comprising

- an identification unit adapted to identifying a change in said target speed $v_{des}$,
and said system being **characterized by** further comprising
- a determination unit adapted to determining an absolute amount for a memory term of said algorithm, which memory term is related to a history of the regulation of said engine system (130) by said speed regulator (120), and which memory term is an integrating term of said speed regulator, and
- a curtailment unit adapted to curtailing the influence of said algorithm upon said engine system (130) if it is determined that said absolute amount of said memory term decreases after said identified change in said target speed $v_{des}$.

**Patentansprüche**

1. Verfahren zum Steuern mindestens eines Geschwindigkeitsreglers (120), bei dem der Regler (120) ein Motorsystem (130) in einem Fahrzeug (100) auf Basis eines Steuerungsalgorithmus steuert, sodass eine aktuelle Geschwindigkeit $v_{act}$ des Fahrzeugs (100) auf eine Zielgeschwindigkeit $v_{des}$ geführt wird, wobei das Verfahren umfasst

   - Identifizieren einer Änderung der Zielgeschwindigkeit $v_{des}$,

   und wobei das Verfahren **dadurch gekennzeichnet ist, dass** es zusätzlich die Schritte umfasst:

   - Ermitteln eines Absolutbetrags für einen Speicherterm des Algorithmus, wobei der Speicherterm sich auf eine Historie des Steuerns des Motorsystems (130) durch den Geschwindigkeitsregler (120) bezieht, und wobei der Speicherterm ein integrierender Term des Geschwindigkeitsreglers ist, und
   - Einschränkung des Einflusses des Algorithmus auf das Motorsystem (130), wenn festgestellt wird, dass der Absolutbetrag des Speicherterms nach der identifizierten Änderung der Zielgeschwindigkeit $v_{des}$ abnimmt.

2. Verfahren nach Anspruch 1, bei dem der Schritt des Einschränkens des Einflusses des Steuerungsalgorithmus auf das Motorsystem (130) ein temporäres Abweichen vom Steuern nach dem Algorithmus umfasst.

3. Verfahren nach Anspruch 2, bei dem das Abweichen vom Steuern nach dem Steuerungsalgorithmus eine Begrenzung eines geforderten Motordrehmoments direkt nach der Änderung, gefolgt von einer Wiederaufnahme der Steuerung basierend auf dem Algorithmus umfasst.

4. Verfahren nach Anspruch 1, bei dem der Schritt des Einschränkens des Einflusses des Steuerungsalgorithmus auf das Motorsystem (130) umfasst, den Speicherterm zu manipulieren.

5. Verfahren nach Anspruch 4, bei dem die Manipulation umfasst, dem Speicherterm direkt nach dem Verändern einen Wert zu geben, sodass der Speicherterm einen anteiligen Term und/oder einen abgeleiteten Term in dem Steuerungsalgorithmus kompensiert.

6. Verfahren nach Anspruch 4, bei dem die Manipulation des Speicherterms dessen Elimination umfasst.

7. Verfahren nach einem der Ansprüche 1-6, bei dem der Steuerungsalgorithmus ein PID Algorithmus ist und der Speicherterm die Form eines integrierenden Terms I in dem PID Algorithmus annimmt.

8. Verfahren nach Anspruch 7, bei dem dem integrierenden Term I bei einer Elimination der Wert null (0) gegeben wird.

9. Verfahren nach einem der Ansprüche 1-8, bei dem die Steuerung weiter ein Handeln basierend auf einer Funktion einer Turboeinheit (131) in dem Motorsystem (130) umfasst, wenn festgestellt wird, dass der Absolutbetrag des Speicherterms nach der identifizierten Änderung der Zielgeschwindigkeit $v_{des}$ abnimmt.

10. Verfahren nach Anspruch 9, bei dem das Handeln basierend auf der Funktion zu einer beträchtlichen Abnahme des Turbodrucks in einer Turboeinheit (131) führt.

11. Verfahren nach einem der Ansprüche 1-10, bei dem die Steuerung weiter mindestens das Bewirken einer Maßnahme umfasst, die den Widerstand eines Antriebsstrangs in dem Fahrzeug (100) verändert, wenn festgestellt wird, dass der Absolutbetrag des Speicherterms abnimmt, nachdem die festgestellte Änderung der Zielgeschwindigkeit $v_{des}$ abnimmt.

12. Verfahren nach Anspruch 11, bei dem die mindestens eine Maßnahme eine Veränderung eines Übersetzungsverhältnisses in einem Schaltgetriebe (103) in dem Fahrzeug (100) umfasst.

13. Verfahren nach Anspruch 12, bei dem die Veränderungen des Übersetzungsverhältnisses eines des Folgenden umfasst:

  - Einlegen eines neutralen Gangs,
  - wenn sich die Veränderung in Form einer Verringerung des Widerstands des Antriebsstrang äußert, Einlegen, eines Gangs niedrigerer Geschwindigkeit als die Fahrzeuggeschwindigkeit es benötigt hätte, woraus sich eine verhältnismäßig langsame Abnahme der Abweichung der aktuellen Geschwindigkeit $v_{act}$ von der Zielgeschwindigkeit $v_{des}$ ergibt,
  - wenn sich die Veränderung in Form einer Verringerung des Widerstands des Antriebsstrang äußert, Einlegen, eines Gangs höherer Geschwindigkeit als die Fahrzeuggeschwindigkeit es benötigt hätte, woraus sich ein erhöhter Fahrwiderstand ergibt.

14. Verfahren nach einem der Ansprüche 1-13, in dem das Motorsystem (130) während des Einschränkens des Einflusses des Steuerungsalgorithmus auf das Motorsystem (130) geschleppt wird, wobei eine Kraftstoffversorgung zu dem Motorsystem (130) gedrosselt wird, wenn das Motorsystem geschleppt wird, und das Motorsystem (130) im Wesentlichen keine Antriebskraft beiträgt.

15. Verfahren nach einem der Ansprüche 1-14, bei dem das Ermitteln auf mindestens einer der folgenden Formen von Information basiert:

  - Information der Fahrtsteuerung,
  - Information der Steuerung,
  - Information der Topographie,
  - Information der Straßenkrümmung,
  - Information der Verkehrssituation,
  - Informationen zu Straßenarbeiten,
  - Information zur Verkehrsdichte,
  - Information zum Straßenoberflächenzustand, und
  - Fahrereingabe.

16. Verfahren nach Anspruch 15, bei dem die mindestens eine Form von Information von mindestens einer der folgenden Vorrichtungen bereitgestellt ist:

  - Fahrtsteuerung,
  - Geschwindigkeitssteuerung,
  - Positionierungsvorrichtung,
  - Karteninformationsvorrichtung,
  - Bildaufnahmevorrichtung,
  - Eingabevorrichtung,
  - Verkehrsinformationsvorrichtung, und
  - Straßenoberflächenzustandsvorrichtung.

17. Computerprogramm, das Programmcode umfasst und das, wenn der Programmcode in einem Computer ausgeführt wird, den Computer dazu veranlasst die Methode nach einem der Ansprüche 1-16 auszuführen.

18. Computerprogrammprodukt, umfassend ein computerlesbares Medium und ein Computerprogramm nach Anspruch 17, wobei das Programm auf dem Medium gespeichert ist.

19. System zur Steuerung mindestens eines Reglers (120), wobei der Regler (120) dazu eingerichtet ist, ein Motorsystem (130) in einem Fahrzeug (100) auf Basis eines Steuerungsalgorithmus zu steuern, sodass eine aktuelle Geschwindigkeit $v_{act}$ des Fahrzeugs (100) auf eine Zielgeschwindigkeit $v_{des}$ geführt wird, wobei das System umfasst

  - eine Identifizierungsvorrichtung, die dazu eingerichtet ist, eine Veränderung der Zielgeschwindigkeit $v_{des}$ zu identifizieren,

und wobei das System **dadurch gekennzeichnet ist, dass** es zusätzlich umfasst:

- eine Ermittlungsvorrichtung, die dazu eingerichtet ist, einen Absolutbetrag für einen Speicherterm des Algorithmus zu ermitteln, wobei der Speicherterm sich auf eine Historie des Steuerns des Motorsystems (130) durch den Geschwindigkeitsregler (120) bezieht, und wobei der Speicherterm ein integrierender Term des Geschwindigkeitsreglers ist, und

- eine Einschränkungsvorrichtung, die dazu eingerichtet ist, den Einfluss des Algorithmus auf das Motorsystem (130) einzuschränken, wenn festgestellt wird, dass der Absolutbetrag des Speicherterms nach der identifizierten Änderung in der Zielgeschwindigkeit $v_{des}$ abnimmt.

**Revendications**

1. Procédé de commande d'au moins un régulateur de vitesse (120), lequel régulateur (120) régule un système moteur (130) dans un véhicule (100) sur la base d'un algorithme de régulation, de manière à amener une vitesse réelle $v_{act}$ dudit véhicule (100) à une vitesse cible $v_{des}$, ledit procédé comprenant d'identifier un changement de ladite vitesse cible $v_{des}$, et ledit procédé étant **caractérisé en ce qu'**il comprend en outre les étapes de :

   - déterminer une quantité absolue pour un terme de mémoire dudit algorithme, lequel terme de mémoire est lié à un historique de la régulation dudit système moteur (130) par ledit régulateur de vitesse (120), et lequel terme de mémoire est un terme d'intégration dudit régulateur de vitesse, et
   - réduire l'influence dudit algorithme sur ledit système moteur (130) s'il est déterminé que ladite quantité absolue dudit terme de mémoire diminue après ledit changement identifié de ladite vitesse cible $v_{des}$.

2. Procédé selon la revendication 1, dans lequel ladite étape consistant à réduire l'influence dudit algorithme de régulation sur ledit système moteur (130) comprend de s'écarter temporairement de la régulation selon ledit algorithme.

3. Procédé selon la revendication 2, dans lequel le fait de s'écarter de ladite régulation selon ledit algorithme de régulation comprend une limitation d'un couple moteur demandé initialement après ledit changement, suivie d'une reprise de ladite régulation sur la base dudit algorithme.

4. Procédé selon la revendication 1, dans lequel ladite étape de réduire l'influence dudit algorithme de régulation sur ledit système moteur (130) comprend une manipulation dudit terme de mémoire.

5. Procédé selon la revendication 4, dans lequel ladite manipulation comprend que ledit terme de mémoire est établi initialement après ledit changement à une valeur telle que ledit terme de mémoire compense un terme proportionnel et/ou un terme dérivé dudit algorithme de régulation.

6. Procédé selon la revendication 4, dans lequel la manipulation dudit terme de mémoire comprend son élimination.

7. Procédé selon l'une quelconque des revendications 1 à 6, dans lequel ledit algorithme de régulation est un algorithme PID et ledit terme de mémoire prend la forme d'un terme d'intégration I dans ledit algorithme PID.

8. Procédé selon la revendication 7, dans lequel ledit terme d'intégration I est établi à la valeur zéro (0) lors d'une élimination.

9. Procédé selon l'une quelconque des revendications 1 à 8, dans lequel ladite commande comprend en outre d'agir sur une fonction d'une unité turbo (131) dans ledit système moteur (130) lorsqu'il est déterminé que ladite quantité absolue dudit terme de mémoire diminue après ledit changement identifié de ladite vitesse cible $v_{des}$.

10. Procédé selon la revendication 9, dans lequel ladite action sur ladite fonction a pour résultat une diminution considérable de la pression de turbo de ladite unité turbo (131).

11. Procédé selon l'une quelconque des revendications 1 à 10, dans lequel ladite commande comprend en outre de prendre au moins une mesure qui change une résistance d'un groupe motopropulseur dans ledit véhicule (100) lorsqu'il est déterminé que ladite quantité absolue dudit terme de mémoire diminue après ledit changement identifié de la vitesse cible $v_{des}$.

12. Procédé selon la revendication 11, dans lequel ladite au moins une mesure comprend un changement de rapport de vitesse dans une boîte de vitesses (103) dans ledit véhicule (100).

13. Procédé selon la revendication 12, dans lequel ledit changement dudit rapport de vitesse comprend une des étapes suivantes :

- enclencher un rapport neutre,
- enclencher, lorsque ledit changement prend la forme d'une diminution de ladite résistance dudit groupe motopropulseur, un rapport de vitesse inférieure à la vitesse de véhicule qui aurait été nécessaire, entraînant une diminution relativement lente de l'écart entre ladite vitesse réelle $v_{act}$ et ladite vitesse cible $v_{des}$,
- enclencher, lorsque ledit changement prend la forme d'une augmentation de ladite résistance dudit groupe motopropulseur, un rapport de vitesse supérieure à la vitesse de véhicule qui aurait été nécessaire, entrainant une résistance à l'avancement accrue.

14. Procédé selon l'une quelconque des revendications 1 à 13, dans lequel ledit système moteur (130) va être décéléré pendant la réduction de l'influence dudit algorithme de régulation sur ledit système moteur (130), une alimentation en carburant dudit système moteur (130) étant étranglée lorsque ledit système moteur est décéléré, et ledit système moteur (130) ne contribuant sensiblement à aucune force de propulsion.

15. Procédé selon l'une quelconque des revendications 1 à 14, dans lequel ladite identification est basée sur au moins une des formes d'information suivantes :

- une information sur la commande de vitesse,
- une information sur le régulateur,
- une information topographique,
- une information sur de courbure de route,
- une information sur une situation de circulation,
- une information sur des travaux routiers,
- une information sur une densité de trafic,
- une information sur un état de surface de la route, et
- une information saisie par un conducteur.

16. Procédé selon la revendication 15, dans lequel ladite au moins une forme d'informations est fournie par au moins un des dispositifs suivants :

- un système de commande de vitesse,
- un régulateur de vitesse,
- un dispositif de positionnement,
- un dispositif d'informations cartographiques,
- un dispositif d'enregistrement d'image,
- un dispositif de saisie d'information,
- un dispositif d'information sur le trafic, et
- un dispositif d'information sur l'état de surface de la route.

17. Programme d'ordinateur qui comprend un code de programme et qui, lorsque ledit code de programme est exécuté dans un ordinateur, amène ledit ordinateur à effectuer le procédé selon l'une quelconque des revendications 1 à 16.

18. Produit de programme d'ordinateur comprenant un support lisible par ordinateur et un programme d'ordinateur selon la revendication 17, lequel programme est contenu dans ledit support.

19. Système de commande d'au moins un régulateur de vitesse (120), lequel régulateur (120) étant adapté pour réguler un système moteur (130) dans un véhicule (100) sur la base d'un algorithme de régulation, de manière à amener une vitesse réelle $v_{act}$ dudit véhicule (100) à une vitesse cible $v_{des}$, ledit système comprenant une unité d'identification adaptée pour identifier un changement de ladite vitesse cible $v_{des}$,
et ledit système étant **caractérisé en ce qu'**il comprend en outre

- une unité de détermination adaptée pour déterminer une quantité absolue pour un terme de mémoire dudit algorithme, lequel terme de mémoire étant lié à un historique de la régulation dudit système moteur (130) par ledit régulateur de vitesse (120), lequel terme de mémoire est un terme d'intégration dudit régulateur de vitesse, et

- une unité de réduction adaptée pour réduire l'influence dudit algorithme sur ledit système moteur (130) s'il est déterminé que ladite quantité absolue dudit terme de mémoire diminue après ledit changement identifié de ladite vitesse cible $v_{des}$.

FIG. 1a

EP 2 847 053 B1

$V_{set}$ → | 110 | → $V_{ref}$ → | 120 | → $M$ → | 130 | → $V_{act}$

# Fig. 1b

```
                    ┌─────────────────────────┐
                    │         [201]            │ ← ┐
              ┌────→ │    Idnetification of     │   │ No
              │      │    change in v_des       │   │ change
              │      └─────────────────────────┘ → ┘
              │                 │ Change
              │      ┌─────────────────────────┐
              │      │         [202]            │
              │      │    Determine absolute    │
              │      │  amount for memory term  │
              │      └─────────────────────────┘
              │                 │
              │      ┌─────────────────────────┐
   Desirable  │      │         [203]            │
   configura ─┘      │    Assess configuration  │
   tion              │      for memory term     │
                     └─────────────────────────┘
                                 │ Undesirable
                                 │ configuration
                     ┌─────────────────────────┐
                     │         [204]            │
                     │    Limit influence of    │
                     │   regulating algorithm   │
                     └─────────────────────────┘
```

# Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0278232 A1